# EUROPEAN PATENT APPLICATION

(11) **EP 2 995 541 A1**
(43) Date of publication of application: **16.03.2016**
(21) Application number: 14794230.4
(22) Date of filing: 28.04.2014
(51) Int. Cl.: B62K 5/05, B62K 25/08

(54) **WHEEL SUSPENSION DEVICE**

(30) Priority: 09.05.2013 JP 2013098957
(71) Applicant: KYB Corporation, Tokyo 105-6111 (JP)
(72) Inventor: KITAMURA, Yasuhiro, Tokyo 105-6111 (JP)
(74) Representative: Grünecker Patent- und Rechtsanwälte PartG mbB
(86) International application number: PCT/JP2014/061844
(87) International publication number: WO 2014/181727

(57) **Abstract**

A vehicle wheel suspension apparatus 100 for supporting an axle of a steered wheel on a saddled vehicle includes a pair of arms AL, AR respectively including outer tubes 1L, 1R and inner tubes 2L, 2R that are inserted into the outer tubes 1L, 1R to be capable of moving relative thereto in an axial direction, whereby the arms AL, AR are capable of expanding and contracting, and a bracket 3 that connects the inner tubes 2L, 2R to each other at upper ends thereof. The outer tubes 1L, 1R are connected to each other. A lower end of the outer tube 1L of the arm AL is disposed below a lower end of the outer tube 1R of the arm AR. An axle support portion 4 that supports the axle of the steered wheel is provided on the lower end of the outer tube 1L of the arm AL so as to be disposed below the outer tube 1 R of the arm AR.

## Description

### TECHNICAL FIELD

The present invention relates to a vehicle wheel suspension apparatus that suspends a steered wheel of a saddled vehicle.

### BACKGROUND ART

A conventional motor tricycle includes two front side steered wheels and a single rear side drive wheel. A saddled vehicle such as a motor tricycle having two steered wheels on the front side is superior to a two-wheeled motorcycle in terms of attitudinal stability and braking ability.

This type of saddled vehicle is steered by performing a handlebar operation on the respective steered wheels. Each of the respective steered wheels is suspended by a vehicle wheel suspension apparatus including a telescopic arm. The arm includes an outer tube and an inner tube that is inserted into the outer tube to be free to slide, whereby the arm is free to expand and contract.

Here, when the steered wheel is suspended by a single arm, and the arm itself is constituted by an outer tube and an inner tube, the inner tube rotates relative to the outer tube in a circumferential direction during an attempt to steer the steered wheel, and as a result, the steered wheel cannot be steered.

Hence, WO2012/007819A1 discloses a vehicle wheel suspension apparatus in which a steered wheel is supported by a pair of telescopic arms, and one arm is caused to function as a rotation stopper for stopping the inner tube of the other arm from rotating relative to the outer tube. In this type of vehicle wheel suspension apparatus, relative rotation between the inner tubes and the outer tubes of the respective arms is stopped, and therefore the steered wheel can be steered by a handlebar operation.

### SUMMARY OF INVENTION

In the vehicle wheel suspension apparatus disclosed in WO2012/007819A1, the outer tubes of the respective arms are fastened to each other by a bolt and a nut. The pair of inner tubes of the arms are gripped by an under-bracket that supports a steering shaft, and connected to each other by the under-bracket.

By connecting the inner tubes using the under-bracket and fastening the outer tubes to each other in this manner, the left and right arms can be made capable of expanding and contracting in conjunction with each other.

Further, a bracket that supports an axle of the vehicle wheel is provided on one of the outer tubes. The bracket is disposed between the outer tubes. In order to dispose the bracket between the outer tubes, an interval for disposing the bracket must be provided between the arms, leading to an increase in a distance between the inner tubes, and as a result, the under-bracket may increase in size.

When the steered wheel is steered, the under-bracket rotates about the steering shaft. The vehicle wheel suspension apparatus is provided for each steered wheel, and therefore, when the size of the under-bracket increases in a case where a layout in which the arms are disposed on respective inner sides of the steered wheels is employed, the left and right under-brackets may interfere with each other. Further, when the steered wheels are steered by a large amount, the arms of one of the vehicle wheel suspension apparatuses may interfere with the vehicle wheel suspended by the other vehicle wheel suspension apparatus.

Hence, in the vehicle wheel suspension apparatus disclosed in WO2012/007819A1, a sufficient distance must be secured between the vehicle wheel suspension apparatuses, and as a result, great limitations, such as the need to increase a vehicle width of the saddled vehicle, are imposed on the layout of the steered wheels of the saddled vehicle.

An object of the present invention is to provide a vehicle wheel suspension apparatus with which a degree of freedom in a layout of a saddled vehicle can be improved.

According to one aspect of the present invention, a vehicle wheel suspension apparatus for supporting an axle of a steered wheel on a saddled vehicle includes a pair of arms respectively including outer tubes and inner tubes that are inserted into the outer tubes to be capable of moving relative thereto in an axial direction, whereby the arms are capable of expanding and contracting and a bracket that connects the inner tubes to each other at upper ends thereof. The outer tubes are connected to each other. A lower end of the outer tube of a first of the arms is disposed below a lower end of the outer tube of a second of the arms. An axle support portion that supports the axle of the steered wheel is provided on the lower end of the outer tube of the first arm so as to be disposed below the outer tube of the second arm.

### BRIEF DESCRIPTION OF DRAWINGS

FIG. 1 is a side view of a vehicle wheel suspension apparatus according to an embodiment of the present invention.
FIG. 2 is a plan view of an under-bracket of the vehicle wheel suspension apparatus according to this embodiment of the present invention.

### DESCRIPTION OF EMBODIMENTS

A vehicle wheel suspension apparatus 100 according to an embodiment of the present invention will be described below with reference to the attached figures.

The vehicle wheel suspension apparatus 100 is employed in a saddled vehicle such as a three-wheeled vehicle having two steered wheels as front wheels to suspend each of the steered wheels. The vehicle wheel suspension apparatus 100 is not limited to a three-wheeled vehicle, and may be provided in any saddled vehicle having two front side steered wheels.

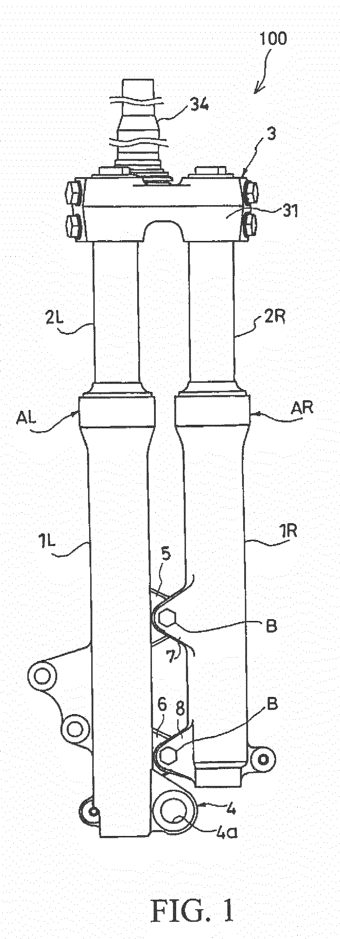

As shown in FIG. 1, the vehicle wheel suspension apparatus 100 includes a pair of arms AL, AR having outer tubes 1L, 1R and inner tubes 2L, 2R that are inserted respectively into the outer tubes 1L, 1R to be capable of moving relative thereto in an axial direction, whereby the arms AL, AR are capable of expanding and contracting, an under-bracket 3 serving as a bracket that connects respective upper ends of the inner tubes 2L, 2R, and an axle support portion 4 provided on a lower end of the outer tube 1 L of the arm AL in order to support an axle of the steered wheel of the three-wheeled vehicle serving as the saddled vehicle, not shown in the figures. The outer tubes 1 L, 1R of the pair of arms AL, AR are connected to each other.

Although not shown in the figures, the three-wheeled vehicle includes two steered wheels provided on the front side, and a single drive wheel provided on a rear side. The two steered wheels are attached to a vehicle body of the three-wheeled vehicle so that the vehicle wheel suspension apparatuses 100 can steer the steered wheels.

Each part will now be described in detail. The arm AL includes the outer tube 1L and the inner tube 2L that is inserted into the outer tube 1L to be capable of moving relative thereto in the axial direction. The arm AL expands and contracts as the inner tube 2L enters and exits the outer tube 1L. A bush, not shown in the figures, is interposed between the outer tube 1L and the inner tube 2L. As a result, the inner tube 2L can move relative to the outer tube 1L in the axial direction without a gap in a radial direction.

A damper, not shown in the figures, is built into the arm AL. When the inner tube 2L displaces relative to the outer tube 1L in the axial direction, or in other words when the arm AL expands and contracts, the inbuilt damper generates a damping force to suppress expansion and contraction of the arm AL. Further, a suspension spring is built into the arm AL in parallel with the damper. The suspension spring biases the outer tube 1L and the inner tube 2L in directions heading away from each other, thereby generating a biasing force for causing the arm AL to expand.

Two flanges 5, 6 are disposed on a side portion of the outer tube 1L side by side in the axial direction. A bolt insertion hole (not having a reference symbol) for inserting a bolt B is provided in one of the flanges 5, 6. A screw hole (not having a reference symbol) into which the bolt B is screwed is provided in the other flange 5, 6.

The axle support portion 4 is provided on a lower end side portion of the outer tube 1L so as to project downward (diagonally downward in FIG. 1) from the outer tube 1R. The axle support portion 4 includes a support hole 4a that allows the axle of the steered wheel to be inserted therein and supports the axle.

The other arm AR includes the outer tube 1R and the inner tube 2R that is inserted into the outer tube 1R to be capable of moving relative thereto in the axial direction. The arm AR expands and contracts as the inner tube 2R enters and exits the outer tube 1R. A damper is not built into the arm AR, and therefore the arm AR simply expands and contracts. A bush, not shown in the figures, is interposed between the outer tube 1R and the inner tube 2R. As a result, the inner tube 2R can move relative to the outer tube 1R in the axial direction without a gap in a radial direction.

Two flanges 7, 8 are disposed on a side portion of the outer tube 1R side by side in the axial direction. The flange 7 and the flange 8 are provided to oppose the flange 5 and the flange 6 of the outer tube 1L, respectively. A screw hole (not having a reference symbol) is provided in one of the flange 7, 8 opposing one of the flange 5, 6 provided with the bolt insertion hole. A bolt insertion hole (not having a reference symbol) is provided in the other of the flange 7, 8 opposing the other of the flange 5, 6 provided with the screw hole.

The outer tube 1L and the outer tube 1R are fastened to each other. More specifically, the flange 5 and the flange 7 are opposed, whereupon the bolt B is inserted into one of the flanges 5, 7 and screwed to the other. Further, the flange 6 and the flange 8 are opposed, whereupon the bolt B is inserted into one of the flanges 6, 8 and screwed to the other. By connecting the flange 5 of the outer tube 1L to the flange 7 of the outer tube 1R and connecting the flange 6 of the outer tube 1L to the flange 8 of the outer tube 1 R in this manner, the outer tube 1L and the outer tube 1R are connected to each other.

The outer tube 1L is formed to be longer than the outer tube 1R such that the axle support portion 4 provided on the lower end side portion of the outer tube 1L is disposed below the outer tube 1R. In so doing, the axle support portion 4 is prevented from interfering with the outer tube 1R.

By forming the outer tube 1L to be longer than the outer tube 1R such that the axle support portion 4 is disposed below the outer tube 1R, and thereby preventing the axle support portion 4 from interfering with the outer tube 1R, the outer tube 1L and the outer tube 1R can be brought closer together.

The outer tubes 1L, 1R are connected to each other in the manner described above, while the inner tubes 2L, 2R are connected to each other by an under-bracket 3 that grips respective upper ends thereof.

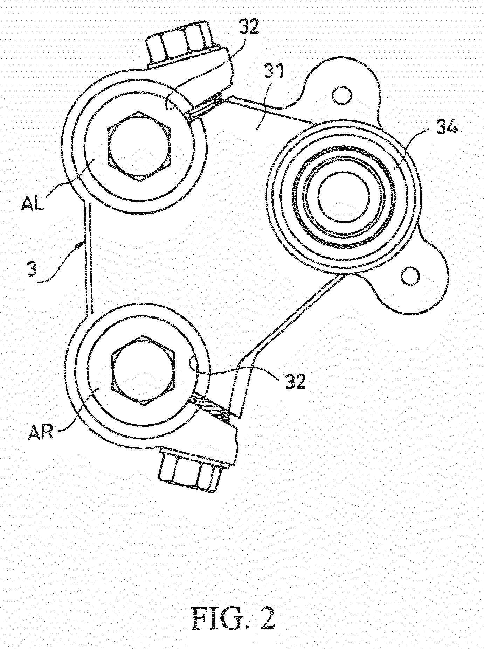

As shown in FIG. 2, the under-bracket 3 includes a bracket main body 31 having gripping holes 32, 33 for gripping the inner tubes 2L, 2R, and a shaft 34 provided so as to be oriented upward (upward in FIG. 1) from the bracket main body 31.

The inner tubes 2L, 2R of the arms AL, AR are connected to each other by the under-bracket 3, while the outer tubes 1L, 1R are fastened to each other by the bolt B. Hence, the inner tube 2L is incapable of rotating relative to the outer tube 1L, and the inner tube 2R is incapable of rotating relative to the outer tube 1R. In other words, one arm AL serves as a rotation stopper for stopping relative rotation between the inner tube 2R and the outer tube 1R of the other arm AR, and the other arm AR serves as a rotation stopper for stopping relative rotation between the inner tube 2L and the outer tube 1L of the arm AL. The outer tubes 1L, 1R may be connected by providing bolt insertion holes for inserting the bolt B in all of the flanges 5, 6, 7, 8, and fastening the flanges 5, 6, 7, 8 using the bolt B and a nut screwed to the bolt B.

Although not shown in the figures, the shaft 34 is connected to a handlebar of the saddled vehicle to be free to rotate. When the handlebar, not shown in the figures, is operated, the under-bracket 3 rotates about the shaft 34, and as a result, the steered wheel supported by the arms AL, AR can be steered.

In the vehicle wheel suspension apparatus 100, the lower end of the outer tube 1L of the arm AL is disposed below the lower end of the outer tube 1R of the arm AR, and the axle support portion 4 that supports the axle of the steered wheel is provided on the lower end of the outer tube 1L of the arm AL so as to be disposed below the outer tube 1R of the arm AR. Therefore, the axle support portion 4 does not interfere with the outer tube 1R of the arm AR, and as a result, the arms AL, AR can be disposed closer together than when a layout in which the axle support portion 4 is disposed between the arms AL, AR is employed.

Hence, in the vehicle wheel suspension apparatus 100, a distance between the inner tubes 2L, 2R of the respective arms AL, AR does not increase, enabling a corresponding reduction in the size of the under-bracket 3. Since the under-bracket 3 can be reduced in size, space can be secured in the vehicle wheel suspension apparatus 100 between the under-brackets 3 disposed on the left and right front sides of the motor tricycle or other saddled vehicle without increasing the vehicle width of the saddled vehicle. Moreover, a distance between the under-brackets 3 can be shortened. As a result, a dramatic increase can be achieved in the layout freedom of the motor tricycle or other saddled vehicle.

In order to dispose the arms AL, AR close together, the lower end of the outer tube 1L of the arm AL may be disposed below the lower end of the outer tube 1R of the arm AR, and the axle support portion 4 that supports the axle of the steered wheel may be provided on the lower end of the outer tube 1L of the arm AL so as to be disposed below the outer tube 1R of the arm AR. Accordingly, the outer tubes 1L, 1R may be formed at equal lengths.

When a damper is built into the arm AL, a stroke length of the arm AL is limited to a stroke length of the damper. In order to generate a damping force, the damper is provided with a stroke length limiting component such as a piston. Hence, when the damper is built into the arm AL, the stroke length of the arm AL shortens. In the vehicle wheel suspension apparatus 100 according to this embodiment, on the other hand, the outer tube 1L of the arm AL is longer than the outer tube 1R of the arm AR, and the axle support portion 4 is disposed below the outer tube 1R of the arm AR. When a damper is built into this arm AL in order to generate a damping force for suppressing expansion and contraction of the arm AL, limitation of the stroke length of the arm AL by the inbuilt damper is relaxed due to the extended length of the outer tube 1 L. A sufficient stroke length can therefore be secured easily in the vehicle wheel suspension apparatus 100. As long as a sufficient stroke length can be secured in the vehicle wheel suspension apparatus, the damper may be built into both arms AL, AR, or built into the arm AR having the shorter outer tube 1R.

Embodiments of this invention were described above, but the above embodiments are merely examples of applications of this invention, and the technical scope of this invention is not limited to the specific constitutions of the above embodiments.

This application claims priority based on Japanese Patent Application No.2013-98957 filed with the Japan Patent Office on May 9, 2013, the entire contents of which are incorporated into this specification.

## Claims

1. A vehicle wheel suspension apparatus for supporting an axle of a steered wheel on a saddled vehicle, comprising:
a pair of arms respectively including outer tubes and inner tubes that are inserted into the outer tubes to be capable of moving relative thereto in an axial direction, whereby the arms are capable of expanding and contracting; and
a bracket that connects the inner tubes to each other at upper ends thereof,
wherein the outer tubes are connected to each other,
a lower end of the outer tube of a first of the arms is disposed below a lower end of the outer tube of a second of the arms, and
an axle support portion that supports the axle of the steered wheel is provided on the lower end of the outer tube of the first arm so as to be disposed below the outer tube of the second arm.

2. The vehicle wheel suspension apparatus as defined in Claim 1, wherein the axle support portion is disposed below the outer tube of the second arm by forming the outer tube of the first arm to be longer than the outer tube of the second arm, and
a damper is built into the first arm in order to generate a damping force for suppressing expansion and contraction of the first arm.
